# FASCICULE DE BREVET EUROPEEN

(11) **EP 1 041 802 B1**
(45) Date de publication et mention de la délivrance du brevet: **24.08.2005**
(21) Numéro de dépôt: 00460018.5
(22) Date de dépôt: 02.03.2000
(51) Int. Cl.: H04M 3/54, H04Q 7/32

(54) **Procédé de gestion de la fonction renvoi d'appel dans un téléphone portable**
Verfahren zur Verwaltung einer Anrufweiterleitung in einem Mobiltelefon
Method of managing the call forwarding function in a mobile phone

(30) Priorité: 01.04.1999 FR 9904295
(43) Date de publication de la demande: 04.10.2000
(73) Titulaire: Société Française du Radiotéléphone-SFR, 75008 Paris (FR)
(72) Inventeur: De Kermadec, Alain M., 75007 Paris (FR)
(74) Mandataire: Vidon, Patrice

(56) Documents cités:
- GB-A- 2 119 204
- US-A- 5 729 599
- NOKIA: "Manuel d'utilisation du telephone 3210" 1999 , NOKIA MOBILE PHONES XP002126350 * page 33, colonne de droite, ligne 1 - ligne 9 * * page 33, ligne 24 * * page 34, ligne 1 - page 35, ligne 20 * * page 61, ligne 1 - page 62, ligne 22 *

## Description

Le domaine de l'invention est celui des télécommunications, notamment des radiocommunications.

Plus précisément, l'invention concerne la gestion des renvois dans les terminaux téléphoniques. On suppose donc, dans la suite de la description, que les terminaux téléphoniques sont du type comprenant des moyens de gestion d'un renvoi téléphonique vers un numéro de téléphone sélectionné par l'utilisateur.

Le terminal téléphonique de l'invention peut notamment, mais non exclusivement, être un radiotéléphone (ou terminal mobile, ou ME pour "Mobile Equipment" en anglais selon la terminologie GSM pour "Global System for Mobile communications" en anglais) par exemple compatible avec un système de radiocommunication de type GSM, DCS 1800 (pour "Digital Cellular System 1800 MHz" en anglais), PCS 1900 (pour "Personal Communication System" en anglais), DECT (pour "Digital European Cordless Telecommunications" en anglais), ou encore UMTS (pour "Universal Mobile Telecommunication System" en anglais).

On rappelle que, de façon classique, on appelle renvoi téléphonique une fonction dont l'activation permet d'aiguiller des appels destinés initialement à un premier terminal téléphonique (dit terminal d'origine) vers (au moins) un second terminal téléphonique (dit terminal destinataire).

Il existe différents types de renvois : renvois systématiques (permettant de renvoyer tous les appels vers le terminal destinataire), renvois sur occupation (permettant de renvoyer les appels vers le terminal destinataire seulement si le terminal d'origine est déjà en communication), etc.

Dans le cadre de la présente invention, on suppose que le renvoi téléphonique est mis en oeuvre à partir du terminal d'origine.

Traditionnellement, la mise en oeuvre d'un renvoi téléphonique d'un type donné, par exemple un renvoi systématique, comprend les étapes successives suivantes :
- l'usager lance (active) la fonction de programmation d'un renvoi. Pour cela, il dispose de plusieurs possibilités (parfois proposées simultanément) : appuyer sur une touche du terminal associée à la fonction de renvoi ("touche préprogrammée"), composer au clavier un code spécifique également associée à la fonction de renvoi, ou encore sélectionner dans un menu (par exemple un menu général) un item correspondant à la fonction de renvoi ;
- au cours de l'exécution de cette fonction de programmation, l'usager est invité à saisir au clavier le numéro du terminal destinataire, puis à valider sa saisie de façon que le renvoi soit effectivement mis en oeuvre avec ce numéro de terminal destinataire.

Il apparaît que ce procédé connu de mise en oeuvre d'un renvoi téléphonique n'offre pas entière satisfaction. Il s'avère notamment que l'étape de saisie au clavier du numéro du terminal destinataire, et éventuellement du code spécifique de renvoi, n'est pas la solution optimale et présente de nombreux inconvénients.

En effet, les numéros des terminaux comprennent aujourd'hui un nombre relativement élevé de chiffres (dix chiffres par exemple pour un numéro national en France). Leur saisie est donc une opération fastidieuse et répétitive puisqu'un usager effectue généralement ia plupart de ses renvois vers un même terminal destinataire. En outre, il existe un risque non négligeable d'erreur lors de cette saisie, pouvant se traduire par la nécessité de réitérer toute la procédure d'activation du renvoi (avec une nouvelle saisie du numéro de terminal destinataire correct), ou pire encore par la validation d'un renvoi vers un numéro de terminal destinataire erroné (sans que l'usager, persuadé d'avoir composé le bon numéro, s'en rende compte).

De plus, cela oblige l'usager à mémoriser le numéro du terminal destinataire, ou à tout le moins à savoir où le retrouver (par exemple sur un répertoire) lorsque cela est nécessaire.

La saisie du code spécifique de renvoi est également contraignante pour l'utilisateur.

En outre, la désactivation d'un renvoi nécessite de la part de l'utilisateur la connaissance et la saisie d'un code spécifique de désactivation de renvoi. A nouveau, ceci est contraignant pour l'utilisateur.

On connaît par ailleurs le document suivant : Nokia, « Manuel d'utilisation du téléphone 3210 » 1999, NOKIA MOBILE PHONES XP002126350, qui est simplement un manuel d'utilisation générique d'un terminal téléphonique. Nulle part, ce document Nokia ne propose (et ne peut proposer) de gestion dynamique d'un menu de renvoi téléphonique. Nulle part dans ce document il n'est divulgué ni même seulement suggéré d'utiliser des numéros de téléphones gérés à l'aide d'une table de numérotation abrégée, ou mieux encore d'utiliser les identifiants associés. Au contraire, selon le paragraphe 3 du chapitre 9 (Renvoi des appels) du document Nokia, il est dit que lorsque l'utilisateur active l'option de renvoi, il doit choisir où renvoyer les appels entrants (boîte vocale ou autre numéro). Il ne s'agit nullement de numéros de téléphone gérés à l'aide d'une table de numérotation. Si ceci avait été évident, il est bien clair que, vu les avantages inhérents (décrits ci-avant) à cette caractéristique de la présente invention, l'équipementier l'aurait proposé dans son manuel.

On connaît aussi le document US-A-5729599, qui ne concerne nullement un menu de renvoi téléphonique géré par un radiotéléphone. Au contraire, il est clairement et uniquement divulgué une méthode de renvoi d'un appel entrant, adaptée à un réseau général (et gérée dans et par un réseau intelligent), par routage vers un numéro d'un abonné qui ne correspond pas à un numéro bloqué au sein d'une base de données. La méthode du document US-A-5729599 présente des étapes permettant de renvoyer un appel entrant vers un numéro de téléphone d'un abonné (vers une destination de routage). Les étapes divulguées incluent initialement le stockage dans une base de données d'une pluralité de numéros dont les destinations sont bloquées. L'étape suivante concerne la réception d'un numéro de destination du routage vers lequel l'appel entrant, vers le numéro d'un abonné, doit être renvoyé. Il est dans ce document parfaitement clair que la gestion des renvois n'est jamais prévue ni mise en oeuvre au sein des terminaux téléphoniques.

L'invention a notamment pour objectif de pallier ces différents inconvénients de l'état de la technique.

Plus précisément, l'un des objectifs de l'invention est de fournir un terminal téléphonique, ainsi qu'un procédé de gestion d'un renvoi téléphonique dans un tel terminal téléphonique, permettant à un usager d'activer ou désactiver aisément un renvoi téléphonique. En d'autres termes, l'un des objectifs de la présente invention est d'améliorer la gestion d'un renvoi téléphonique au sein d'un terminal téléphonique.

Notamment, par rapport au procédé connu discuté ci-dessus, le procédé de l'invention a pour objectif d'être plus rapide, d'être source de moins d'erreurs et de ne nécessiter aucune mémorisation d'information de la part de l'usage (tant pour l'activation du renvoi que pour sa désactivation).

L'invention a également pour objectif de fournir un tel procédé permettant de réduire, voire rendre nulle, la quantité de données (numéros de téléphone, ...) saisies au clavier par l'usager.

Ces différents objectifs, ainsi que d'autres qui apparaîtront par la suite, sont atteints selon l'invention à l'aide d'un terminal téléphonique, selon la revendication 1.

Le principe général de l'invention consiste donc à proposer directement à l'usager, à travers un menu de renvoi téléphonique, d'activer un ou plusieurs items correspondant à un ou plusieurs numéros de téléphone susceptibles chacun d'être choisi comme numéro de terminal destinataire. L'inventeur a en effet observé que le numéro de terminal destinataire est généralement choisi par l'usager parmi un nombre relativement restreint de numéros de téléphone. L'inventeur les a regroupés en deux familles d'items probables, à savoir les derniers numéros de renvoi téléphonique utilisés et les numéros de téléphone gérés à l'aide d'une table de numérotation abrégée. Il est clair que la présente invention peut être mise en oeuvre soit avec une seule de ces deux familles d'items probables, soit avec les deux simultanément.

La sélection d'un item du menu de renvoi provoque automatiquement l'activation d'un renvoi vers le terminal distant dont le numéro correspond à celui de l'item sélectionné. En d'autres termes, l'utilisateur sélectionne un item et le numéro de téléphone correspondant est fourni automatiquement, en tant que numéro de terminal destinataire, aux moyens de gestion d'un renvoi afin que ceux-ci mettent en oeuvre le renvoi demandé. On rappelle qu'au contraire, dans l'art antérieur, l'utilisateur doit obligatoirement saisir un code spécifique de renvoi puis le numéro du terminal destinataire.

On rappelle que la notion de menus au sein d'un terminal téléphonique est connue en soi. Dans ce cas, le terminal téléphonique comprend un clavier, muni d'une pluralité de touches, et un écran de visualisation, permettant notamment la visualisation de menus. Chaque menu comporte généralement une pluralité d'items, c'est-à-dire d'options susceptibles d'être activées sélectivement par l'utilisateur, chaque option correspondant par exemple à une fonction, une donnée ou un service, voire un sous-menu.

En revanche, il n'a jamais été proposé de menu de renvoi téléphonique sans aucune phase de saisie. En effet, jusqu'ici, l'utilisateur doit systématiquement saisir le code spécifique de renvoi et le numéro de terminal destinataire vers lequel les moyens de gestion d'un renvoi effectuent le renvoi.

Avec la présente invention, lors de chaque programmation d'un renvoi, l'usager n'a à saisir ni le code spécifique de renvoi ni le numéro du terminal destinataire. Ceci réduit - voire supprime - les risques de saisie. En effet, lors de la programmation d'un renvoi, ce n'est pas l'usager qui indique au terminal téléphonique le(s) dernier(s) numéro(s) de renvoi téléphonique utilisé(s) (ce(s) numéro(s) peu(ven)t ne jamais être saisi(s) par l'usager), ni le(s) numéro(s) de téléphone géré(s) à l'aide de la table de numérotation abrégée (ce(s) numéro(s) sont saisi(s) par l'usager, lors du remplissage de la table de numérotation abrégée, et éventuellement modifiés ensuite, si une mise à jour s'avère nécessaire).

L'absence de saisie lors de la programmation d'un renvoi permet en outre un gain de temps non négligeable, et rend beaucoup plus conviviale l'utilisation de la fonction de renvoi téléphonique.

Pour les items de la seconde famille d'items probables, l'usager effectue donc un choix parmi des identifiants (généralement des noms), et non pas parmi des numéros de téléphone, ce qui est bien sûr beaucoup plus convivial.

Le support de données amovible est par exemple un module d'identification d'abonné. On rappelle que, selon les normes en vigueur, un radiotéléphone (ou terminal mobile, ou encore ME, pour "Mobile Equipment" selon la terminologie GSM) coopère, grâce à des moyens de lecture et/ou d'écriture adéquats, avec un module d'identification d'abonné (ou SIM, pour "Subscriber Identity Module" selon la terminologie GSM, ou encore DAM, pour "DECT Authentication Module" selon la terminologie DECT).

Dans ce cas, le menu de renvoi téléphonique selon la présente invention peut donc être l'un des "menus opérateur" proposant des fonctionnalités gérées par le module d'identification d'abonné. Il est clair que, selon une variante, le menu de renvoi téléphonique selon la présente invention peut être l'un des "menus constructeur". On distingue en effet généralement deux types de menu disponibles sur un radiotéléphone, à savoir :
- les menus, dits "menus constructeur", proposant des fonctionnalités (fonctions et/ou services) gérées par le terminal téléphonique (telles que par exemple le réglage de l'intensité lumineuse de l'écran du terminal). Le contenu des "menus constructeur" dépend donc du constructeur du terminal ;
- les menus, dits "menus opérateur", proposant des fonctionnalités (fonctions et/ou services) gérées par le module d'identification d'abonné (telles que par exemple l'accès à des serveurs de services distants propres à l'opérateur et/ou à un offreur de services tiers ayant passé un contrat avec l'opérateur). Le contenu des "menus opérateur" dépend donc de l'opérateur ayant distribué ce module d'identification d'abonnéet/ou de l'offreur de services tiers. Les opérateurs tentent bien sûr de proposer un choix maximal de fonctionnalités au sein de leurs "menus opérateurs".

Dans le cas du GSM, l'accès à des "menus opérateur" suppose généralement que le terminal et le module d'identification d'abonné supportent l'application normalisée "SIM Application Toolkit", telle que décrite en détail dans les normes "GSM 11.11, GSM 11.14 et GSM 11.14 (Phase 2+)" de l'ETSI (qui sont insérées ici par référence). Le module d'identification d'abonné 4 est alors qualifié de "proactive SIM", selon la terminologie GSM. En résumé, le "SIM Application Toolkit" est un jeu de commandes et de procédures (protocoles) permettant au module d'identification d'abonné 4 de gérer des fonctionnalités en "prenant la main" (à la place du terminal) et en envoyant des commandes au terminal 3.

Préférentiellement, ledit menu de renvoi téléphonique comprend en outre une commande permettant l'introduction d'un numéro de téléphone quelconque.

Ainsi, l'utilisateur peut ajouter, de façon dynamique, des numéros de téléphone à la liste des numéros proposés dans le menu de renvoi. Ces numéros peuvent être stockés dans la table de numérotation abrégée.

Dans un mode de réalisation particulier de l'invention, ledit menu de renvoi téléphonique comprend successivement les items suivants :
- le dernier numéro de renvoi téléphonique utilisé ;
- les N premiers numéros de téléphone gérés à l'aide de ladite table de numérotation abrégée, N étant un nombre prédéterminée ;
- ladite commande permettant l'introduction d'un numéro de téléphone quelconque.

On notera que dans ce mode de réalisation particulier, on se limite, pour la première famille d'items probables, au dernier numéro de renvoi téléphonique utilisé.

De façon avantageuse, ledit menu de renvoi téléphonique ne présente pas de ligne vide, lesdits items n'apparaissant dans ledit menu de renvoi téléphonique que lorsqu'ils sont effectivement disponibles ou programmés. Ainsi, on améliore encore le confort d'utilisation du menu de renvoi.

De façon préférentielle, ledit menu de renvoi téléphonique est un sous-menu de niveau x(n-2), accessible par le choix d'un item associé à la fonctionnalité « activation d'un renvoi » et proposé au sein d'un sous-menu de niveau y(n-1) supérieur à x(n-2), ledit sous-menu de niveau supérieur (n-1) étant lui-même accessible par le choix d'un item (item « renvoi » prédéterminé proposé au sein d'un menu principal de niveau z(n) supérieur à y(n-1).

Préférentiellement, ledit sous-menu de niveau y(n-1) propose également un item associé à la fonctionnalité « désactivation d'un renvoi ».

De façon préférentielle, le terminal téléphonique est un radiotéléphone.

L'invention concerne également un procédé selon la revendication 8, de gestion d'un renvoi téléphonique vers un numéro de téléphone sélectionné par l'utilisateur, dans un terminal téléphonique,

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma simplifié d'un mode de réalisation particulier d'un terminal téléphonique selon l'invention, mettant en oeuvre un menu de renvoi téléphonique ; et
- la figure 2 illustre un exemple de structure arborescente à trois niveaux correspondant à la mise en oeuvre d'un mode de réalisation particulier du procédé selon la présente invention.

L'invention concerne donc la gestion (activation/désactivation) d'un renvoi téléphonique au sein d'un terminal téléphonique.

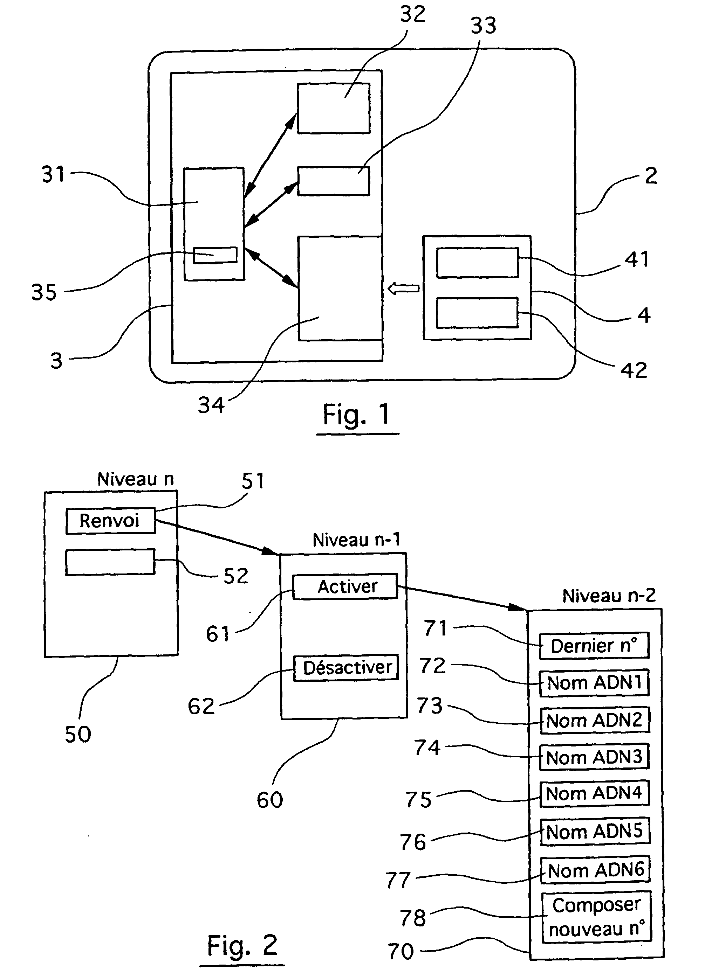

Dans la suite de la description, et comme cela apparaît sur la figure 1, on considère que le terminal téléphonique est un radiotéléphone mobile 3, par exemple de type GSM. Il est clair cependant que l'invention n'est nullement limitée à ce type de terminal téléphonique, et s'applique également à un terminal téléphonique fixe ou à un téléphone sans fil.

On rappelle qu'un radiotéléphone mobile 3 (ou ME, pour "Mobile Equipment", selon la terminologie GSM) coopère selon les normes actuelles avec un module d'identification d'abonné 4 (ou SIM, pour "Subscriber Identity Module", selon la terminologie GSM). On appelle "station mobile" 2 (ou MS, pour "Mobile Station", selon la terminologie GSM) l'ensemble constitué du terminal 3 et du module d'identification d'abonné 4. Pour plus de précisions sur chacun de ces éléments 3 et 4, on pourra se reporter aux normes "GSM 11.11 et GSM 11.14 (Phase 2+)" de l'ETSI, qui sont insérées ici par référence.

De façon classique, le terminal 3 comprend une pluralité d'éléments coopérant entre eux, tels que notamment un microprocesseur 31, un écran d'affichage 32, un clavier 33 et un lecteur de module d'identification d'abonné 34 (permettant la lecture, et aussi généralement l'écriture sur ce module).

Egalement de façon classique, le radiotéléphone mobile 3 comprend des moyens 35 de gestion (c'est-à-dire d'activation/désactivation) d'un renvoi téléphonique vers un numéro de téléphone qui leur est fourni après avoir été déterminé par l'utilisateur. Ces moyens 35 de gestion d'un renvoi sont par exemple compris dans le microprocesseur 31 du terminal 3.

La présente invention prévoit que le radiotéléphone comprend, par exemple dans le module d'identification d'abonné 4, des moyens 41 de gestion dynamique d'un menu de renvoi téléphonique, permettant à un utilisateur d'activer un renvoi par simple sélection d'un item de ce menu.

Dans un mode de réalisation particulier de l'invention, le menu de renvoi téléphonique comprend les items suivants :
- item n° 71 : le dernier numéro de renvoi téléphonique utilisé ;
- items 72 à 77: les N (avec N = 6 dans l'exemple illustré) numéros de téléphone gérés à l'aide d'une table de numérotation abrégée 42 mise à jour par l'utilisateur ;
- item n° 78 : une commande permettant l'introduction d'un numéro de téléphone quelconque.

Cette structure arborescente comprend :

Un menu principal 50 de niveau n, comprenant notamment un item « renvois » 51, permettant l'accès à un sous-menu 60 du même nom ("renvois") et de niveau n-1.

Le sous-menu "renvoi" 60 propose notamment les deux items suivants :
- l'item "activer" 61, permettant l'accès à un sous-menu 70 de niveau n-2 (appelé dans la présente description "menu de renvoi téléphonique". On rappelle que la sélection d'un item 71 à 77 de ce sous-menu (hormis la commande 78 de saisie d'un nouveau numéro) permet d'activer directement un renvoi vers le numéro concerné, sans aucune saisie d'information par l'utilisateur ;
- l'item "désactiver" 62, permettant de désactiver un renvoi en cours.

Il est clair que d'autres structures arborescentes peuvent être envisagées sans sortir du cadre de la présente invention. Notamment, on peut prévoir un niveau de sous-menu supplémentaire, entre les niveaux n et n-1 précités, afin de permettre à l'utilisateur de choisir un type de renvoi parmi une pluralité.

Les moyens 41 peuvent également assurer la gestion dynamique de la désactivation d'un renvoi, également par simple sélection par l'utilisateur d'un item d'un autre menu.

On décrit maintenant, en relation avec la figure 2, un exemple de structure arborescente comprenant ces différents menus (ou sous-menus).

On peut prévoir que le menu de renvoi téléphonique ne présente pas de ligne vide. Dans ce cas, les items n'apparaissent dans le menu de renvoi téléphonique que lorsqu'ils sont effectivement disponibles ou programmés.

Selon une variante, le menu de renvoi téléphonique comprend non pas les numéros de téléphone lus dans la table de numérotation abrégée 42, mais les noms associés à ces numéros dans cette table.

Dans le cas d'un radiotéléphone mobile de type GSM, la table de numérotation abrégée 42 mise à jour par l'utilisateur est par exemple l'agenda d'abonné appelé "ADN" (pour "Abreviated Dialling Numbers" en anglais). La table ADN peut être stockée sur le terminal 3 ou sur le module d'identfication d'abonné 4. Pour plus de précisions sur cette table ADN, on pourra se reporter aux normes "GSM 02.07, GSM 11.11 et GSM 11.14 (Phase 2+)" de l'ETSI, qui sont insérées ici par référence.

On présente maintenant plusieurs techniques permettant de sélectionner d'un item au sein d'un menu ou sous-menu.

Selon une technique classique, la visualisation et la sélection d'un item compris dans un menu ou sous-menu s'effectuent par défilement (ou "scrolling" en anglais) des items, par lequel la définition ou la description des items apparaît sur une fenêtre active à l'écran (par exemple en regard d'un repère ou équivalent). Cette définition ou cette description peut être soit une indication verbale (ce que signifie éthymologiquement le terme "item "), soit une icône ou un autre type de représentation figurative renvoyant systématiquement à l'option sélectionnable. L'utilisateur du terminal téléphonique peut faire apparaître et défiler (par exemple face à un repère fixe) sur l'écran de visualisation du terminal téléphonique, les items, en appuyant sur une ou plusieurs touche(s) de déplacement prévue(s) sur le clavier. On prévoit par exemple deux touches de déplacement assurant respectivement un déplacement vers le haut et vers le bas. L'utilisateur peut ensuite appuyer sur une touche permettant la sélection de l'item correspondant. On rappelle que dans le cadre de la présente invention, la sélection d'un item du menu de renvoi (excepté l'item de commande d'introduction d'un numéro) permet d'activer de façon automatique un renvoi vers le numéro de téléphone correspondant à l'item sélectionné.
Selon une variante, la sélection d'un item compris dans un menu ou sous-menu s'effectue grâce à la technique décrite dans le demande de brevet ayant pour titre "terminal téléphonique pourvu de moyens de gestion de la visualisation de menus et procédé correspondant", déposée le même jour que la présente demande et par la même Déposante. Cette technique consiste à affecter une ou plusieurs touches directement à au moins certains des items. L'application de cette technique à la présente invention implique que le terminal téléphonique comprenne des moyens de gestion des menus, affectant sélectivement à au moins certain(s) des items du menu de renvoi téléphonique au moins une touche du clavier. L'appui sur une des touches affectées (ou simultanément sur plusieurs touches affectées) assure directement la sélection de l'item correspondant.

## Revendications

1. Terminal téléphonique (2), comprenant des moyens (35) de gestion d'un renvoi téléphonique vers un numéro de téléphone sélectionné par l'utilisateur, **caractérisé en ce qu'**il comprend des moyens (41) de gestion dynamique d'un menu de renvoi téléphonique utilisant des identifiants associés à des numéros de téléphone (72 à 77) ainsi que les derniers numéros de renvoi téléphonique utilisés (71) gérés à l'aide d'une table de numérotation abrégée (42) mise à jour par l'utilisateur, les moyens de gestion dynamique d'un menu de renvoi téléphonique étant au moins partiellement présents dans un support de données amovible (4) destiné à être inséré dans un lecteur (34) correspondant dudit terminal.

2. Terminal téléphonique selon la revendication 1, **caractérisé en ce que** ledit menu de renvoi téléphonique comprend en outre une commande (78) permettant l'introduction d'un numéro de téléphone quelconque.

3. Terminal téléphonique selon la revendication 2, **caractérisé en ce que** ledit menu de renvoi téléphonique comprend successivement les items suivants :
- le dernier numéro de renvoi téléphonique utilisé (71) ;
- les N premiers numéros de téléphone (72 à 77) gérés à l'aide de ladite table de numérotation abrégée (42), N étant un nombre prédéterminée;
- ladite commande (78) permettant l'introduction d'un numéro de téléphone quelconque.

4. Terminal téléphonique selon l'une quelconque des revendications 1 à 3, **caractérisé en ce que** ledit menu de renvoi téléphonique ne présente pas de ligne vide, lesdits items n'apparaissant dans ledit menu de renvoi téléphonique que lorsqu'ils sont effectivement disponibles ou programmés.

5. Terminal téléphonique selon l'une quelconque des revendications 1 à 4, **caractérisé en ce que** ledit menu de renvoi téléphonique est un sous-menu de niveau x(n-2), accessible par le choix d'un item associé à la fonctionnalité « activation d'un renvoi » et proposé au sein d'un sous-menu de niveau y(n-1) supérieur à x (n-2), ledit sous-menu de niveau supérieur y(n-1) étant lui-même accessible par le choix d'un item (item « renvoi ») prédéterminé proposé au sein d'un menu principal de niveau z(n) supérieur à y(n-1).

6. Terminal téléphonique selon la revendication 5, **caractérisé en ce que** ledit sous-menu de niveau y(n-1) propose également un item associé à la fonctionnalité « désactivation d'un renvoi ».

7. Terminal téléphonique selon l'une quelconque des revendications 1 à 6, **caractérisé en ce qu'**il s'agit d'un radiotéléphone.

8. Procédé de gestion d'un renvoi téléphonique vers un numéro de téléphone sélectionné par l'utilisateur, dans un terminal téléphonique,
**caractérisé en ce qu'**il comprend une étape de gestion dynamique d'un menu de renvoi téléphonique utilisant des identifiants associés à des numéros de téléphone (77 à 77) ainsi que les derniers numéros de renvoi téléphonique utilisés ( 71) gérés à l'aide d'une table de numérotation abrégée (42) mise à jour par l'utilisateur, l'étape de gestion dynamique d'un menu de renvoi téléphonique étant au moins partiellement mise en oeuvre dans un support de données amovible (4) destiné à être inséré dans un lecteur (34) correspondant dudit terminal.

## Patentansprüche

1. Telefonterminal (2), welches Mittel (35) zum Verwalten einer telefonischen Umleitung zu einer vom Benutzer gewählten Telefonnummer umfasst,
**dadurch gekennzeichnet, dass** es über Mittel (41) zur dynamischen Verwaltung eines Menüs für telefonische Umleitungen verfügt, welches Identifizierungsmittel nutzt, denen Telefonnummern (72 bis 77) zugeordnet sind sowie die letzten verwendeten Umleitungsnummern (71), die mit Hilfe einer vom Benutzer aktualisierten, verkürzten Nummerierungstabelle (42) verwaltet werden, wobei die Mittel zur dynamischen Verwaltung eines Menüs für telefonische Umleitungen zumindest teilweise in einem herausnehmbaren Datenträger (4) gespeichert sind, der in ein entsprechendes Lesegerät (34) des Terminals eingeführt wird.

2. Telefonterminal nach Anspruch 1,
**dadurch gekennzeichnet, dass** das Menü für telefonische Umleitungen ferner über eine Befehlstaste (78) verfügt, welche die Eingabe einer beliebigen Telefonnummer erlaubt.

3. Telefonterminal nach Anspruch 2,
**dadurch gekennzeichnet, dass** das Menü für telefonische Umleitungen nacheinander die folgenden Punkte umfasst:
- die letzte verwendete Umleitungsnummer (71);
- die N ersten Telefonnummern (72 bis 77), die mit Hilfe der verkürzten Nummerierungstabelle (42)verwaltet werden, wobei N eine vorgegebene Zahl ist;
- die Befehlstaste (78), welche die Eingabe einer beliebigen Telefonnummer erlaubt.

4. Telefonterminal nach einem der Ansprüche 1 bis 3,
**dadurch gekennzeichnet, dass** das Menü für telefonische Umleitungen keine leere Leitung aufweist, wobei die erwähnten Punkte nur dann im Menü für telefonische Umleitungen erscheinen, wenn sie tatsächlich verfügbar oder programmiert sind.

5. Telefonterminal nach einem der Ansprüche 1 bis 4,
**dadurch gekennzeichnet, dass** das Menü für telefonische Umleitungen ein Untermenü der Ebene x(n-2) ist, das durch Wahl eines mit der Funktionalität "Aktivierung einer Umleitung" assoziierten und innerhalb eines Untermenüs der Ebene y(n-1), die höher als x(n-2) ist, vorgeschlagenen Punktes zugänglich ist, wobei dieses Untermenü der höheren Ebene y(n-1) selbst durch Wahl eines vorgegebenen Punktes (Punkt "Umleitung") zugänglich ist, das innerhalb eines Hauptmenüs der Ebene z(n), die höher als y(n-1) ist, vorgeschlagen wird.

6. Telefonterminal nach Anspruch 5,
**dadurch gekennzeichnet, dass** das Untermenü der Ebene y(n-1) ebenfalls einen mit der Funktionalität "Aktivierung einer Umleitung" assoziierten Punkt vorschlägt.

7. Telefonterminal nach einem der Ansprüche 1 bis 6,
**dadurch gekennzeichnet, dass** es sich um ein Funktelefon handelt.

8. Verwaltungsverfahren einer telefonischen Umleitung zu einer vom Benutzer gewählten Telefonnummer in einem Telefonterminal,
**dadurch gekennzeichnet, dass** es einen Schritt zur dynamischen Verwaltung eines Menüs für telefonische Umleitungen, welches Identifizierungsmittel nutzt, denen Telefonnummern (72 bis 77) zugeordnet sind sowie die letzten verwendeten Umleitungsnummern (71), die mit Hilfe einer vom Benutzer aktualisierten, verkürzten Nummerierungstabelle (42) verwaltet werden, wobei der Schritt zur dynamischen Verwaltung eines Menüs für telefonische Umleitungen zumindest teilweise in einem herausnehmbaren Datenträger (4) zum Einsatz kommt, der in ein entsprechendes Lesegerät (34) des Terminals eingeführt wird.

## Claims

1. Telephone terminal (2) including means (35) for managing call forwarding to a telephone number selected by the user, **characterised in that** it includes means (41) of dynamic management of a call forwarding menu using identifiers associated with telephone numbers (72 to 77) and the last call forwarding numbers used (71) managed using an abbreviated dialling table (42) kept up-to-date by the user, the means of dynamic management of a call forwarding menu being at least partly present in a removable data medium (4) intended to be inserted in a corresponding reader (34) of the said terminal.

2. Telephone terminal according to Claim 1, **characterised in that** the said call forwarding menu additionally includes a command (78) for entering any telephone number.

3. Telephone terminal according to Claim 2, **characterised in that** the said call forwarding menu includes, successively, the following items:
- the last call forwarding number used (71);
- the first N telephone numbers (72 to 77) managed using the said abbreviated dialling table (42), where N is a predetermined number;
- the said command (78) for entering any telephone number.

4. Telephone terminal according to any one of Claims 1 to 3, **characterised in that** the said call forwarding menu does not display empty rows, the said items appearing in the said call forwarding menu only when they are truly available or programmed.

5. Telephone terminal according to any one of Claims 1 to 4, **characterised in that** the said call forwarding menu is a submenu of level x(n-2) that can be accessed by choosing an item associated with the "activate forwarding" feature and offered within a submenu of level y(n-1) above x(n-2), the said higher level submenu y(n-1) itself accessible by choosing a predetermined item ("call forwarding" item) offered within a main menu of level z(n) above y(n-1).

6. Telephone terminal according to Claim 5, **characterised in that** the said submenu of level y(n-1) also offers an item associated with the "deactivate forwarding" feature.

7. Telephone terminal according to any one of Claims 1 to 6, **characterised in that** it is a mobile phone.

8. Method for managing call forwarding to a telephone number selected by the user, in a telephone terminal, **characterised in that** it includes a step of dynamic management of a call forwarding menu using identifiers associated with telephone numbers (72 to 77) and the last call forwarding numbers used (71) managed using an abbreviated dialling table (42) kept up-to-date by the user, the step of dynamic management of a call forwarding menu being at least partly implemented in a removable data medium (4) intended to be inserted in a corresponding reader (34) of the said terminal.
